# EUROPÄISCHE PATENTSCHRIFT

(11) **EP 3 518 061 B1**
(45) Veröffentlichungstag und Bekanntmachung des Hinweises auf die Patenterteilung: **10.11.2021**
(21) Anmeldenummer: 19000113.1
(22) Anmeldetag: 22.04.2016
(51) Int. Cl.: G05B 19/418, G05B 23/02, G06Q 10/06, G05B 21/02, G06Q 10/00

(54) **DIAGNOSETOOL UND DIAGNOSEVERFAHREN ZUR ERMITTLUNG EINER STÖRUNG EINER ANLAGE**
DIAGNOSTIC TOOL AND DIAGNOSTIC METHOD FOR DETERMINING A FAULT IN AN INSTALLATION
OUTIL DE DIAGNOSTIC ET PROCÉDÉ DE DIAGNOSTIC DESTINÉ À LA DÉTERMINATION D'UN DÉFAUT D'UNE INSTALLATION

(43) Veröffentlichungstag der Anmeldung: 31.07.2019
(62) Teilanmeldung aus: 16166687.0
(73) Patentinhaber: Siemens Aktiengesellschaft, 80333 München (DE)
(72) Erfinder: Siegel, Tobias, 92318 Neumarkt in der Oberpfalz (DE)

(56) Entgegenhaltungen:
- DE-A1-102004 050 386
- US-A1- 2009 094 080
- US-A1- 2012 093 647
- D. H. GEER ET AL: "A Modern Condition Monitoring and Gas Turbine Control System", VOLUME 5: MANUFACTURING MATERIALS AND METALLURGY; CERAMICS; STRUCTURES AND DYNAMICS; CONTROLS, DIAGNOSTICS AND INSTRUMENTATION; EDUCATION; PROCESS INDUSTRIES; TECHNOLOGY RESOURCES, 4. Juni 1984 (1984-06-04), XP055474359, DOI: 10.1115/84-GT-220 ISBN: 978-0-7918-7950-4
- Takayuki Aoyama ET AL: "Field Digital Device Diagnostics for Effective Use of Device Information -Visualizing Device Status and Reducing Device Alarms in a Chemical Plant", English Edition, 1 January 2011 (2011-01-01), XP055682568, Retrieved from the Internet: URL:https://web-material3.yokogawa.com/rd- te-r05401-009.pdf?_ga=2.19104952.124510264 9.1585861189-1210029171.1585861189 [retrieved on 2020-04-03]
- Siemens: "SIMATIC Industrial software SIMATIC Maintenance Station 2009", , 1 January 2009 (2009-01-01), XP055413012, Retrieved from the Internet: URL:http://www.efesotomasyon.com/html/siem ens/sms_hb_b_en-US.pdf [retrieved on 2017-10-05]

## Beschreibung

Die Erfindung betrifft ein Diagnosetool zur Ermittlung einer Störung einer Anlage mit zumindest einem Gerät. Zudem betrifft die Erfindung ein Diagnoseverfahren. Das Diagnosetool ist insbesondere dazu geeignet das erfindungsgemäße Diagnoseverfahren durchzuführen.

Der Anlagenzustand zeigt den Zustand der Maschine/Anlage als Gesamtes (Kundensicht). Der Anlagenzustand kann z.B. die Hauptzeit, Nebenzeit, Störung, Wartung, Instandhaltung uvm. wie beispielweise in OMAC," Organization for Machine Automation and Control" erläutert ist, beinhalten. Zudem kann der Anlagenzustand auch den Gerätezustand beinhalten.

Störungen können daher in den Geräten und im Anlagenzustand auftreten. Eine Kategorisierung der Störung, nach Störung wegen Wartung oder während des Betriebs ist nur mit großem manuellem Aufwand möglich.

Üblicherweise werden Maschinen- bzw. Anlagenzustände durch Messung geeigneter Größen überwacht. Hier spricht man vom sogenannten Condition Monitoring um die Sicherheit und Anlageneffizienz zu erhöhen. Dazu werden zum einen Geräte mit verschiedenen Sensoren ausgestattet, die geeignete Größen wie z.B. Schwingungen der Geräte messen bzw. erfassen.

Geräte, im nachfolgende auch teilweise einfach als Geräte bezeichnet, sind Geräte die direkt an/in der Anlage angeordnet sind. Automatisierungsgeräte besitzen zudem Überwachungsfunktionen, um externe Störungen, z.B. Kurzschluss, Drahtbruch, Überstrom, uvm. oder um interne Störungen, z.B. Programmierfehler, Speicherüberläufe, uvm. zu detektieren.

Detektierte Störungen von den Geräten, d.h. der Gerätezustand, werden an überlagerte Systeme, z.B. SPS, HMI oder andere Software gemeldet. Diese Meldungen geben einen Überblick über den Zustand der einzelnen Automatisierungskomponenten.

DE 102004050386 beschreibt die zeitgestempelte Bilddaten, die an die zentrale Erfassungs- und Auswerteeinheit übermittelt werden. Die Bilderfassungseinrichtungen sind dazu in unmittelbarer Nähe zu der Warenbahn positioniert.

US 2012/093647 zeigt, dass die versehene Daten von verschiedenen Prozessoren mit Zeitstempeln empfangen werden, um die Daten miteinander zu korrelieren.

Takayushi Aoyama al: "Field Digital Device Diagnostics for Effective Use of Device Information -Visualizing Device Status and Reducing Device Alarms in a Chemical Plant" zeigt, dass Gerätezustände und Alarme durch ein PRM (Plant Resource Manager) System überwacht werden. Eine Vielzahl von Geräten soll überwacht werden, wobei es eben aufgrund dieser Vielzahl schwierig ist, die Übersicht zu behalten. Aus diesem Grund wird ein PRM Diagnosetool vorgeschlagen.

Die Aufgabe der vorliegenden Erfindung liegt in der Bereitstellung eines wenig aufwendigen Diagnosetools und eines Diagnoseverfahrens zur einfachen Ermittlung einer Störung in einer Anlage.

Die auf die Vorrichtung bezogene Aufgabe wird gelöst durch die Angabe eines Diagnosetools zur Ermittlung einer Störung einer Anlage mit zumindest einem Gerät, wobei
- ein Anlagenzustand (1) zu einem Erfassungszeitpunkt durch Erfassung zumindest eines Anlagenzustandswertes ermittelbar ist und der Anlagenzustand (1) an das Diagnosetool (5) übermittelbar ist, wobei der Anlagenzustand den Zustand der Anlage als Gesamtes zeigt,
- ein Gerätezustand (2) zu dem Erfassungszeitpunkt durch Erfassung zumindest eines Gerätezustandswertes ermittelbar ist und der Gerätezustand (2) an das Diagnosetool (5) übermittelbar ist,
- bei zeitgleicher Übermittlung des Gerätezustandes und des Anlagenzustandes dem übermittelten Gerätezustand und dem übermittelten Anlagenzustand eine gemeinsame Zeitbasis zugeordnet wird, wobei im Falle eines bereits vorhandenen Zeitstempels, der mit dem Anlagenzustand (1) oder mit dem Gerätezustandes 2 übermittelt wurde, kann diese gemeinsame Zeitbasis (6) den Zeitstempel überschreiben oder zusätzlich zuordnen,
- und der übermittelte Gerätezustand (2) und der übermittelte Anlagenzustand (1) korrelierbar sind.

Die auf das Verfahren bezogene Aufgabe wird gelöst durch die Angabe eines Diagnoseverfahrens zur Ermittlung einer Störung einer Anlage mit zumindest einem Gerät mit den folgenden Schritten:
- Ermittlung eines Anlagenzustandes (1) zu einem Erfassungszeitpunkt durch Erfassung zumindest eines Anlagenzustandswertes und Übermittlung des Anlagenzustands (1) an das Diagnosetool (5), wobei der Anlagenzustand den Zustand der Anlage als Gesamtes zeigt,
- Ermittlung eines Gerätezustandes (2) zu dem Erfassungszeitpunkt durch Erfassung zumindest eines Gerätezustandswertes und Übermittlung des Gerätezustands (2) an das Diagnosetool (5),
- wobei bei zeitgleicher Übermittlung des Gerätezustandes und des Anlagenzustandes dem übermittelten Gerätezustand und dem übermittelten Anlagenzustand eine gemeinsame Zeitbasis zugeordnet wird, und
- wobei im Falle eines bereits vorhandenen Zeitstempels, der mit dem Anlagenzustand (1) oder mit dem Gerätezustandes 2 übermittelt wurde, kann diese gemeinsame Zeitbasis (6) den Zeitstempel überschreiben oder zusätzlich zugeordnet werden,
- wobei das Diagnose weiter den folgenden Schritt enthält:
- Korrelation des übermittelten Gerätezustands (2) und übermittelten Anlagenzustands (1).

Bisher musste eine Korrelation zwischen einem Anlagenzustand und einem Gerätezustand in unterschiedlichen Tools erfolgen und manuell durch den Endkunden durchgeführt werden, d.h. für die unterschiedlichen Zustände gibt es unterschiedliche Tools mit unterschiedlichen Zeitbasen. Dabei war zu beachten, dass die unterschiedlichen Tools unterschiedliche Zeitbasen haben. Erfindungsgemäß wurde erkannt, dass bei einem Nichtbetrieb in der Anlage, nicht erkannt werden konnte, ob es sich eine Störung in der Anlage, im Gerät oder einen geplanten Nichtbetrieb handelte. Eine Kategorisierung der Störung, nach Störung wegen Wartung oder während des Betriebs, war daher nur mit großem manuellem Aufwand möglich. Eine Korrelation der Zustände konnte nur durch Experten durchgeführt werden, die manuell die Zustände verknüpft haben, z.B. durch Expertenwissen über verknüpfte Ereignisse.

Durch eine Korrelation des Anlagenzustands und Gerätezustands zu einem Erfassungszeitpunkt, d.h. zu einem gleichen Zeitpunkt, können gewollte Störungen, z.B. Wartung eines Automatisierungsgeräts, und ungewollte Störungen genauer diagnostiziert werden. Störungen, die während des Betriebs der Anlage auftreten sind schwerwiegendere Störungen, da sie den Produktionsbetrieb des Kunden verhindern.

Durch die Integration von Maschinen- und Gerätezustand zu einem Erfassungszeitpunkt, d.h. zu einem gleichen Zeitpunkt, können die Informationen mit einer Zeitbasis versehen werden. Durch die gemeinsame Zeitbasis kann die Störung, durch auswerten des Maschinen- und Gerätezustand manuell oder automatisiert kategorisiert werden. Die Kategorisierung kann als Basis für weitere Auswertungen, z.B. OEE (Overall Equipment Effectiveness), Verfügbarkeit, usw. verwendet werden.

Die Informationen zum Anlange- und Gerätezustand können über unterschiedliche Mechanismen und Protokolle ermittelt werden.

In den Unteransprüchen sind weitere vorteilhafte Maßnahmen aufgelistet, die beliebig miteinander kombiniert werden können, um weitere Vorteile zu erzielen.

Vorteilhafterweise wird die Anordnung auf eine gemeinsame Zeitbasis durch Integration des Gerätezustands und des Anlagenzustands in das Diagnosetool bewerkstelligt. Durch die Integration von Anlagen- und Gerätezustand können die Informationen mit einer Zeitbasis versehen werden. Auch bei Integration des Anlagenzustands und des Gerätezustands, ist die Vergabe des gleichen Zeitstempel an den Anlagenzustand und an den Gerätezustand vornehmbar.

In einer bevorzugten Ausgestaltung wird durch Auswertung des korrelierten Gerätezustands und des korrelierten Anlagenzustands auf der gemeinsamen Zeitbasis eine Kategorisierung der Störung bewerkstelligt.

Die Kategorisierung der Störung wird bevorzugt in die folgenden Kategorien unterteilt:
a) Störung während dem Betrieb (Produktionsverhindernd)
b) Störung während der Wartung und Stillstand (nicht Produktionsverhindernd)

Vorteilhafterweise ist die Auswertung manuell oder automatisch durchführbar.

In einer weiteren bevorzugten Ausgestaltung sind der korrelierte Gerätezustand und der korrelierte Anlagenzustand grafisch anzeigbar. Diese Visualisierung können beispielsweise farblich markierte Balken sein.

In einer weiteren bevorzugten Ausgestaltung umfassen der Gerätezustand und der Anlagenzustand zumindest Informationen über den Betrieb und/oder Stillstand. Selbstverständlich können auch andere oder weitere den Betrieb oder Stillstand betreffende Informationen umfasst werden.

Bevorzugt, aber nicht einschränkend, ist das Diagnosetool als Softwaretool ausgestaltet.

Auch kann die Erfassung die Übermittlung des Gerätezustands als auch des Anlagenzustands und die Zuordnung zu einer Zeitbasis mit geringem oder gar keinem Zeitversatz erfolgen.

Vorteilhafterweise umfasst die Zeitbasis das Datum und/oder die aktuelle Uhrzeit.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- FIG 1: schematisch eine Verknüpfung von einem Anlagenzustand 1 und einem Gerätezustand 2 nach dem Stand der Technik,
- FIG 2: schematisch ein erfindungsgemäßes Diagnosetool 5,
- FIG 3: eine grafische Darstellung des Gerätezustands 2 und des Anlagenzustands 1 einer Störung während des Betriebs einer Anlage,
- FIG 4: eine grafische Darstellung des Gerätezustands 2 und des Anlagenzustands 1 einer Gerätestörung während der Wartungsphase einer Anlage,
- FIG 5: eine grafische Darstellung des Gerätezustands 2 und des Anlagenzustands 1 einer Anlagen- und Gerätestörung während der Wartungsphase einer Anlage.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

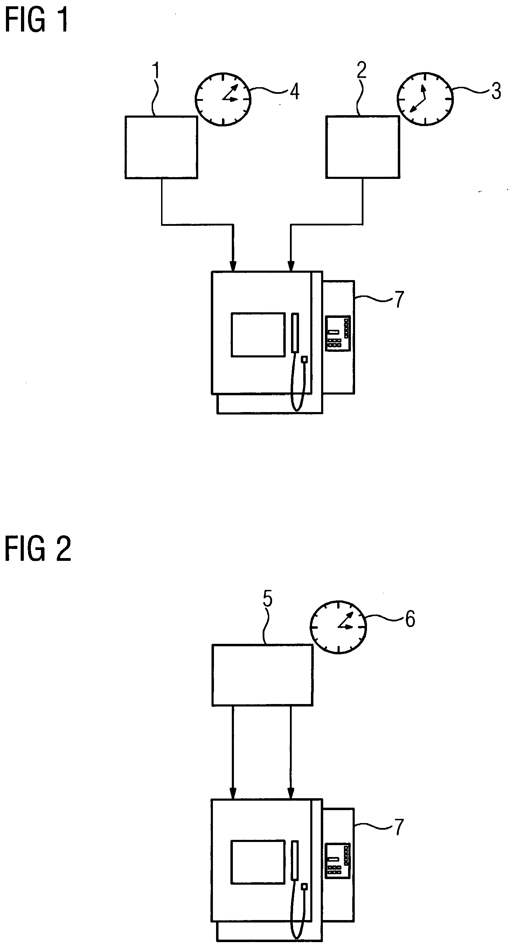

FIG 1 zeigt eine Verknüpfung von einem Anlagenzustand 1 und einem Gerätezustand 2 nach dem Stand der Technik. Dabei wird der Anlagenzustand 1 durch Erfassung zumindest eines Anlagenzustandswertes zu einem Erfassungszeitpunkt ermittelt.

Der Anlagenzustand 1 kann z.B. Informationen über die Hauptzeit, Nebenzeit, Störung, Wartung, Instandhaltung uvm. beinhalten. Zudem kann der Anlagenzustand 1 auch den/die Gerätezustände 2 beinhalten.

Der Gerätezustand 2 ist durch Erfassung zumindest eines Gerätezustandswertes zu demselbigen Erfassungszeitpunkt ermittelbar. Eine Verknüpfung der Zustände erwies sich als schwierig, da die unterschiedlichen Tools unterschiedliche Zeitbasen und Zeitstempel besitzen. D.h. selbst wenn der Erfassungszeitpunkt derselbe ist, sind aufgrund unterschiedlicher Zeitbasen/Zeitstemple diese nicht gleich. Dabei umfasst die Zeitbasis in diesem Beispiel die reguläre Uhrzeit. Die Kategorisierung der Störung einer Anlage bzw. eines Automatisierungsgerätes, hinsichtlich einer Störung wegen einer Wartung oder einer Störung während des Betriebs, und die damit verbundene Steuerung 7, sind nur mit großem manuellem Aufwand möglich.

Die Zeitbasen können zudem durch überlagerte Tools oder externe Aktionen verändert werden. Dadurch ist eine Korrelation von Anlagenzustand und Gerätezustand 2 nicht möglich. So weist der Anlagenzustand 1 eine Anlagenzustandszeit 4 bzw. einen Zeitstempel von 15.06 Uhr auf. Der Gerätezustand 2 weist dazu eine dazu unterschiedliche Zeitbasis auf, zeigt nämlich 19.58 Uhr als Gerätezustandszeit 3 an.

Eine Korrelation der Zustände konnte nur durch Experten durchgeführt werden, die manuell die Zustände verknüpft haben, z.B. durch Expertenwissen über verknüpfte Ereignisse. Dies wird nun mithilfe der Erfindung vermieden.

FIG 2 zeigt ein Diagnosetool 5 nach der Erfindung. Der Anlagenzustand 1 (FIG 1) wird ebenfalls durch Erfassung zumindest eines Anlagenzustandswertes ermittelt. Zudem wird der Anlagenzustand 1 (FIG 1) an das erfindungsgemäße Diagnosetool 5 übermittelt.

Der Gerätezustandes 2 (FIG 2) wird ebenfalls durch Erfassung zumindest eines Gerätezustandswertes ermittelt. Der Gerätezustand 2 (FIG 1) wird an das erfindungsgemäße Diagnosetool 5 übermittelt. Dabei findet die Übermittelung des Anlagenzustandes 1 (FIG 1) und des Gerätezustandes 2 (FIG 2) zeitgleich d.h. parallel statt. Erfindungsgemäß wird nun dem übermittelten Gerätezustand 2 (FIG 1) und dem übermittelten Anlagenzustand 1 (FIG 1) eine gemeinsame Zeitbasis 6 zugeordnet. Im Falle eines bereits vorhandenen Zeitstempels, der mit dem Anlagenzustand 1 (FIG 2) bzw. Gerätezustandes 2 (FIG 2) übermittelt wurde, kann dies Zeitbasis 6 diesen überschreiben oder zusätzlich zuordnen. Durch Anordnen des Gerätezustands 2 (FIG 2) und des Anlagenzustands 1 (FIG 2) auf der gemeinsamen Zeitbasis 6 sind der übermittelte Gerätezustand und der übermittelte Anlagenzustands, korrelierbar.

Die Korrelation von Anlagenzustand 1 (FIG 2) und Gerätezustand 2 (FIG 2) kann durch die Integration von beiden Zuständen in ein Diagnosetool 5 bewerkstelligt werden.

Erfindungsgemäß werden somit durch die Integration von Anlagenzustand 1 (FIG 2) und Gerätezustand 2 (FIG 2) die Informationen mit einer Zeitbasis 6 versehen. Durch die gemeinsame Zeitbasis 6 kann die Störung, durch Auswerten des Anlagenzustand 1 (FIG 2) und Gerätezustand 2 (FIG 2) manuell oder automatisiert kategorisiert werden. Die Kategorisierung kann als Basis für weitere Auswertungen, z.B. OEE (Overall Equipment Effectiveness), Verfügbarkeit, usw. beispielsweise in der Steuerungseinrichtung 7 usw. verwendet werden.

Die Integration des Anlagen- und Gerätezustands in einem Tool mit einer gemeinsamen Zeitbasis 6 bieten dem Benutzer die Möglichkeit beide Zustände einfach zu korrelieren.

Die Informationen zum Anlagenzustand 1 und Gerätezustand 2 können über unterschiedliche Mechanismen und Protokolle ermittelt werden.

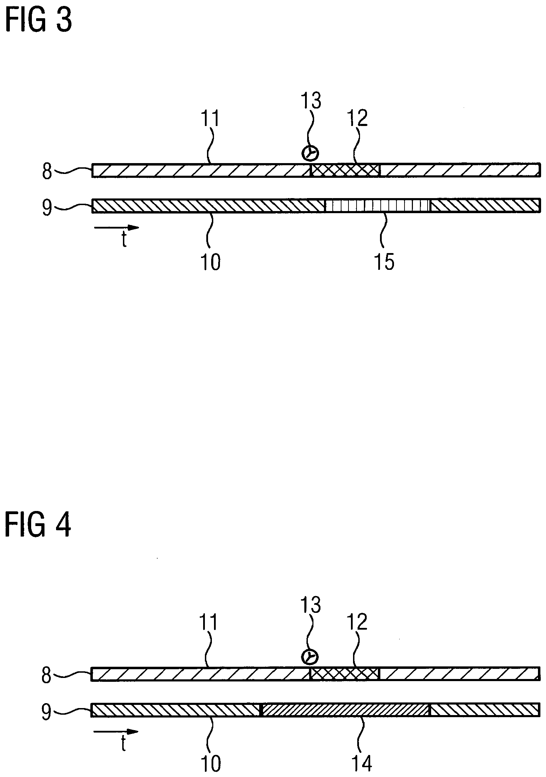

FIG 3 zeigt eine produktionsverhindernde Störung während des Betriebs an. Dabei wird der Gerätezustand 2 und der Anlagenzustand 1 als grafische Balken visualisiert angezeigt. Dabei ist der Gerätezustandsbalken 8 als Oberbalken dargestellt und wird im nachfolgenden Text auch einfachheitshalber als Oberbalken 8 so beschrieben. Der Anlagenzustandsbalken 9 ist als Unterbalken dargestellt und wird im nachfolgenden Text auch einfachheitshalber als Unterbalken 9 so beschrieben. Der Anlagenzustandsbalken 9 und der Gerätezustandsbalken 8 werden über die Zeit *t*, welche die Grundlage der gemeinsamen Zeitbasis 6 (FIG 3) darstellt, aufgetragen.

Die Anlage kann sich dabei in der Produktionsbetriebsphase der Anlage befinden; dies ist im Anlagenzustandsbalken 9 als Nummer 10 gekennzeichnet. Die Anlage kann sich jedoch auch einem Störanlagenzustand (gestörter Zustand der Anlage) befinden, dies ist im Anlagenzustandsbalken 9 als Störanlagenzustand 15 gekennzeichnet.

Das Gerät kann sich ebenfalls in der Betriebsphase befinden; dies ist im Gerätezustandsbalken 8 als Nummer 11 gekennzeichnet. Das Gerät kann sich jedoch auch einem Störgerätezustand (gestörter Zustand des Gerätes) befinden, dies ist im Gerätezustandsbalken 9 als Störgerätezustand 12 gekennzeichnet.

Durch die gemeinsame Zeitbasis 6 kann die Störung, durch auswerten des Anlagenzustands 1 und Gerätezustands 2 manuell oder automatisiert kategorisiert werden.

Dabei wird bevorzugt eine Kategorisierung der Störung in die folgenden Kategorien vorgenommen:
a) Störung während des Betriebs (Produktionsverhindernd)
b) Störung während der Wartung und des Stillstands (nichtproduktionsverhindernd)

In bevorzugter Ausgestaltung werden dazu grafische Icons (Anzeigen) 13 an den Balken 8 und 9 angebracht, welche durch die Anlagenzustandswerte und Gerätezustandswerte wie Informationen über Wartung oder andere Events übermittelt wurden. Somit lässt sich leicht erkennen, ob es sich um eine produktionsverhindernde Störung oder nicht-produktionsverhindernde Störung handelt.

In FIG 3 zeigt während des Produktivbetriebs 10 der Anlage ein Auftreten einer Störung des Gerätes (Störgerätezustand 12) durch z.B. Gerätestörung oder Geräteneustart, welche produktionsverhindernd ist und zum ungeplanten Stillstand der Anlage führt.

Diese Störungen sind ungeplant und führen zu betriebswirtschaftlichen Verlusten des Kunden.

FIG 4 zeigt eine nicht-produktionsverhindernde Störung während des Betriebs an.

Auch hier ist die Produktionsbetriebsphase der Anlage im Anlagenzustandsbalken 9 als Nummer 10 gekennzeichnet. Befindet sich die Anlage in einem Wartungszustand (Wartungsphase 14 der Anlage) befinden, ist dies hier im Anlagenzustandsbalken 9 als Nummer 14 gekennzeichnet.

Das Gerät kann sich dabei in der Betriebsphase befinden; dies ist im Gerätezustandsbalken 8 auch hier als Nummer 11 gekennzeichnet. Das Gerät kann sich jedoch auch in einem Störgerätezustand (gestörter Zustand des Gerätes) befinden, dies ist im Gerätezustandsbalken 9 auch hier als Nummer 12 gekennzeichnet.

Wenn während einer Wartungsphase 14 der Anlage ein Störgerätezustand 12 (gestörter Zustand des Gerätes) auftritt, dann ist dieser nicht produktionsverhindernd und führt nicht zu einem ungeplanten Stillstand der Anlage.

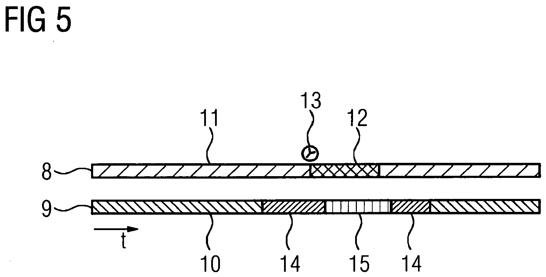

FIG 5 zeigt ebenfalls eine nicht-produktionsverhindernde Störung während des Betriebs an.

Auch hier ist die Produktionsbetriebsphase der Anlage im Anlagenzustandsbalken 9 als Nummer 10 gekennzeichnet. Befindet sich die Anlage in einem Wartungszustand (Wartungsphase der Anlage), ist dies hier im Anlagenzustandsbalken 9 als Wartungsphase 14 gekennzeichnet.

Das Gerät kann sich dabei in der Betriebsphase befinden; dies ist im Gerätezustandsbalken 8 als Nummer 11 gekennzeichnet. Das Gerät kann sich jedoch auch einem Störgerätezustand (gestörter Zustand des Gerätes) befinden, dies ist im Gerätezustandsbalken 9 als Nummer 12 gekennzeichnet.

Wenn während einer Wartungsphase 14 der Anlage ein Störgerätezustand 12 (gestörter Zustand des Gerätes) und ein Störanlagenzustand 15 (gestörter Zustand der Anlage) auftritt, dann ist diese nicht produktionsverhindernd und führt nicht zu einem ungeplanten Stillstand der Anlage.

Diese Störungen sind geplant und führen zu nicht zu ungewollten betriebswirtschaftlichen Verlusten des Kunden. Die Kategorisierung der Störung kann manuell oder automatisiert erfolgen.

Durch die erfindungsgemäße Korrelation des Anlagenzustands und Gerätezustands können vereinfacht gewollte Störungen, z.B. Wartung einer Anlage oder eines Geräts oder ungewollte Störungen, genauer diagnostiziert werden. Störungen, die während des Betriebs der Anlage auftreten, sind ungewollte, schwerwiegendere Störungen, da sie den Produktionsbetrieb des Kunden verhindern.

Weitere Ausführungsformen sind im Folgenden angegeben:
Eine erste Ausführungsform umfasst ein Diagnosetool 5 zur Ermittlung einer Störung einer Anlage 7 mit zumindest einem Gerät dadurch gekennzeichnet, dass
- ein Anlagenzustand 1 zu einem Erfassungszeitpunkt durch Erfassung zumindest eines Anlagenzustandswertes ermittelbar ist und der Anlagenzustand 1 an das Diagnosetool 5 übermittelbar ist,
- ein Gerätezustand 2 zu dem Erfassungszeitpunkt durch Erfassung zumindest eines Gerätezustandswertes ermittelbar ist und der Gerätezustand 2 an das Diagnosetool 5 übermittelbar ist,
- dem übermittelten Gerätezustand und dem übermittelten Anlagezustand eine gemeinsame Zeitbasis zuordenbar ist,
- und der übermittelte Gerätezustand 2 und der übermittelte Anlagenzustand 1 durch Anordnen des Gerätezustands und des Anlagenzustands auf der gemeinsamen Zeitbasis korrelierbar sind.

Eine zweite Ausführungsform umfasst ein Diagnoseverfahren zur Ermittlung einer Störung einer Anlage 7 mit zumindest einem Gerät **gekennzeichnetdurch** die Schritte:
- Ermittlung eines Anlagenzustandes 1 zu einem Erfassungszeitpunkt durch Erfassung zumindest eines Anlagenzustandswertes und Übermittlung des Anlagenzustands 1 an das Diagnosetool 5,
- Ermittlung eines Gerätezustandes 2 zu dem Erfassungszeitpunkt durch Erfassung zumindest eines Gerätezustandswertes und Übermittlung des Gerätezustands 2 an das Diagnosetool 5,
- Zuordnen von einer gemeinsamen Zeitbasis zu dem übermittelten Gerätezustand und dem übermittelten Anlagenzustand,
- Korrelation des übermittelten Gerätezustands 2 und übermittelten Anlagenzustands 1 durch Anordnen des Gerätezustands und des Anlagenzustands an der gemeinsamen Zeitbasis.

Eine dritte Ausführungsform umfasst ein Diagnoseverfahren zur Ermittlung nach der zweiten Ausführungsform,
**dadurch gekennzeichnet, dass** die Anordnung auf eine gemeinsame Zeitbasis 6 durch Integration des Gerätezustands 2 und des Anlagenzustands 1 in das Diagnosetool 5 bewerkstelligt wird.

Eine vierte Ausführungsform umfasst ein Diagnoseverfahren zur Ermittlung nach der zweiten oder dritten Ausführungsform,
**dadurch gekennzeichnet, dass** bei Integration des Anlagenzustands 1 und des Gerätezustands, die Vergabe des gleichen Zeitstempel an den Anlagenzustand 1 und an den Gerätezustand 2 vorgenommen wird.

Eine fünfte Ausführungsform umfasst ein Diagnoseverfahren zur Ermittlung nach der zweiten, dritten oder vierten Ausführungsform, **dadurch gekennzeichnet, dass** durch Auswertung des korrelierten Gerätezustands 2 und des korrelierten Anlagenzustands 1 auf der gemeinsamen Zeitbasis 6 eine Kategorisierung der Störung bewerkstelligbar ist.

Eine sechste Ausführungsform umfasst ein Diagnoseverfahren nach der fünften Ausführungsform,
**dadurch gekennzeichnet, dass** die Störung zumindest hinsichtlich produktionsverhindernder und nicht-produktionsverhindernder Störung erfolgt.

Eine siebte Ausführungsform umfasst ein Diagnoseverfahren zur Ermittlung nach Anspruch fünften oder sechsten Ausführungsform,
**dadurch gekennzeichnet, dass** die Auswertung manuell oder automatisch durchführbar ist.

Eine achte Ausführungsform umfasst ein Diagnoseverfahren nach einer der Ausführungsformen zwei bis sieben,
**dadurch gekennzeichnet, dass** der korrelierte Gerätezustand 2 und der korrelierte Anlagenzustand 1 grafisch anzeigbar sind.

Eine neunte Ausführungsform umfasst ein Diagnoseverfahren nach einer der Ausführungsformen zwei bis acht,
**dadurch gekennzeichnet, dass** die Erfassung die Übermittlung des Gerätezustands 2 und des Anlagenzustands 1 und die Zuordnung zu einer Zeitbasis 6 mit geringem oder gar keinem Zeitversatz erfolgen.

Eine zehnte Ausführungsform umfasst ein Diagnoseverfahren nach einer der Ausführungsformen zwei bis neun,
**dadurch gekennzeichnet, dass** der Gerätezustand 2 und der Anlagenzustand 1 zumindest Informationen über den Betrieb und/oder Stillstand umfassen.

Eine elfte Ausführungsform umfasst ein Diagnoseverfahren nach der zehnten Ausführungsform,
**dadurch gekennzeichnet, dass** der Gerätezustand 2 und der Anlagenzustand 1 weitere, den Betrieb oder Stillstand betreffende Informationen umfassen.

Eine zwölte Ausführungsform umfasst ein Diagnoseverfahren, welches auf einem Diagnosetool 5 nach einer der ersten Ausführungsform durchführbar ist.

## Patentansprüche

1. Diagnosetool (5) zur Ermittlung einer Störung einer Anlage (7) mit zumindest einem Gerät,
**dadurch gekennzeichnet, dass**
- ein Anlagenzustand (1) zu einem Erfassungszeitpunkt durch Erfassung zumindest eines Anlagenzustandswertes ermittelbar ist und der Anlagenzustand (1) an das Diagnosetool (5) übermittelbar ist, wobei der Anlagenzustand den Zustand der Anlage als Gesamtes zeigt,
- ein Gerätezustand (2) zu dem Erfassungszeitpunkt durch Erfassung zumindest eines Gerätezustandswertes ermittelbar ist und der Gerätezustand (2) an das Diagnosetool (5) übermittelbar ist,
- bei zeitgleicher Übermittlung des Gerätezustandes und des Anlagenzustandes dem übermittelten Gerätezustand und dem übermittelten Anlagenzustand eine gemeinsame Zeitbasis zugeordnet wird, wobei im Falle eines bereits vorhandenen Zeitstempels, der mit dem Anlagenzustand (1) oder mit dem Gerätezustand (2) übermittelt wurde, kann diese gemeinsame Zeitbasis (6) den Zeitstempel überschreiben oder zusätzlich zuordnen,
- und der übermittelte Gerätezustand (2) und der übermittelte Anlagenzustand (1) korrelierbar sind.

2. Diagnosetool (5) nach Anspruch 1,
**dadurch gekennzeichnet, dass** eine Anordnung auf eine gemeinsame Zeitbasis (6) durch Integration des Gerätezustands (2) und des Anlagenzustands (1) in das Diagnosetool (5) bewerkstelligbar ist.

3. Diagnosetool (5) nach Anspruch 2,
**dadurch gekennzeichnet, dass** bei Integration des Anlagenzustands (1) und des Gerätezustands (2), die Vergabe des gleichen Zeitstempels an den Anlagenzustand (1) und an den Gerätezustand (2) vornehmbar ist.

4. Diagnosetool (5) nach einem der vorhergehenden Ansprüche,
**dadurch gekennzeichnet, dass** durch Auswertung des korrelierten Gerätezustands (2) und des korrelierten Anlagenzustands (1) auf der gemeinsamen Zeitbasis (6) eine Kategorisierung der Störung bewerkstelligbar ist.

5. Diagnosetool (5) nach Anspruch 4,
**dadurch gekennzeichnet, dass** die Störung zumindest hinsichtlich produktionsverhindernder und nicht-produktionsverhindernder Störung erfolgt.

6. Diagnosetool (5) nach Anspruch 4 oder 5,
**dadurch gekennzeichnet, dass** die Auswertung manuell oder automatisch durchführbar ist.

7. Diagnosetool (5) nach einem der vorhergehenden Ansprüche, **dadurch gekennzeichnet, dass** der korrelierte Gerätezustand (2) und der korrelierte Anlagenzustand (1) grafisch anzeigbar sind.

8. Diagnosetool (5) nach einem der vorhergehenden Ansprüche, **dadurch gekennzeichnet, dass** der Gerätezustand (2) und der Anlagenzustand (1) zumindest Informationen über den Betrieb und/oder Stillstand umfassen.

9. Diagnosetool (5) nach Anspruch 8,
**dadurch gekennzeichnet, dass** der Gerätezustand (2) und der Anlagenzustand (1) weitere, den Betrieb oder Stillstand betreffende Informationen umfasst.

10. Diagnosetool (5) nach einem der vorhergehenden Ansprüche, **dadurch gekennzeichnet, dass** das Diagnosetool (5) als Softwaretool ausgestaltet ist.

11. Diagnosetool (5) nach einem der vorhergehenden Ansprüche, **dadurch gekennzeichnet, dass** die Erfassung, die Übermittlung des Gerätezustands (2) als auch der Anlagenzustand (1) und die Zuordnung zu einer Zeitbasis (6) mit geringem oder gar keinem Zeitversatz erfolgen.

12. Diagnosetool (5) nach einem der vorhergehenden Ansprüche, **dadurch gekennzeichnet, dass** die Zeitbasis (6) das Datum und/oder die aktuelle Uhrzeit umfasst.

13. Diagnoseverfahren zur Ermittlung einer Störung einer Anlage (7) mit zumindest einem Gerät
**gekennzeichnet durch** die Schritte:
― Ermittlung eines Anlagenzustandes (1) zu einem Erfassungszeitpunkt durch Erfassung zumindest eines Anlagenzustandswertes und Übermittlung des Anlagenzustands (1) an das Diagnosetool (5), wobei der Anlagenzustand den Zustand der Anlage als Gesamtes zeigt,
― Ermittlung eines Gerätezustandes (2) zu dem Erfassungszeitpunkt durch Erfassung zumindest eines Gerätezustandswertes und Übermittlung des Gerätezustands (2) an das Diagnosetool (5),
― wobei bei zeitgleicher Übermittlung des Gerätezustandes und des Anlagenzustandes dem übermittelten Gerätezustand und dem übermittelten Anlagenzustand eine gemeinsame Zeitbasis zugeordnet wird, und
― wobei im Falle eines bereits vorhandenen Zeitstempels, der mit dem Anlagenzustand (1) oder mit dem Gerätezustand (2) übermittelt wurde, kann diese gemeinsame Zeitbasis (6) den Zeitstempel überschreiben oder zusätzlich zugeordnet werden,
― wobei das Diagnose weiter den folgenden Schritt enthält:
― Korrelation des übermittelten Gerätezustands (2) und übermittelten Anlagenzustands (1).

14. Diagnoseverfahren zur Ermittlung nach Anspruch 13,
**dadurch gekennzeichnet, dass** eine Anordnung auf eine gemeinsame Zeitbasis (6) durch Integration des Gerätezustands (2) und des Anlagenzustands (1) in das Diagnosetool (5) bewerkstelligt wird.

15. Diagnoseverfahren zur Ermittlung nach Anspruch 13 oder 14,
**dadurch gekennzeichnet, dass** bei Integration des Anlagenzustands (1) und des Gerätezustands, die Vergabe des gleichen Zeitstempel an den Anlagenzustand (1) und an den Gerätezustand (2) vorgenommen wird.

## Claims

1. Diagnostic tool (5) for determining an interruption in a plant (7) with at least one device,
**characterised in that**
- a plant status (1) can be determined at a recording time by recording at least one plant status value and the plant status (1) can be transmitted to the diagnostic tool (5), wherein the plant status indicates the status of the plant as a whole,
- a device status (2) can be determined at the recording time by recording at least one device status value and the device status (2) can be transmitted to the diagnostic tool (5),
- when the device status and the plant status are transmitted at the same time, a shared time base (6) is assigned to the transmitted device status and the transmitted plant status, wherein if a time stamp is already available, which was transmitted with the plant status (1) or with the device status (2), said shared time base (6) can overwrite or additionally assign the time stamp,
- and the transmitted device status (2) and the transmitted plant status (1) can be correlated.

2. Diagnostic tool (5) according to claim 1,
**characterised in that**
a coordination on a shared time base (6) can be effected by integrating the device status (2) and the plant status (1) into the diagnostic tool (5).

3. Diagnostic tool (5) according to claim 2,
**characterised in that**
upon integration of the plant status (1) and of the device status (2) the same time stamp can be allocated to the plant status (1) and to the device status (2).

4. Diagnostic tool (5) according to one of the preceding claims,
**characterised in that**
a categorisation of the interruption is able to be effected by evaluating the correlated device status (2) and the correlated plant status (1) on the shared time base (6).

5. Diagnostic tool (5) according to claim 4,
**characterised in that**
the interruption takes place at least in terms of a production-interfering and a non-production-interfering interruption.

6. Diagnostic tool (5) according to claim 4 or 5,
**characterised in that**
the evaluation can be carried out manually or automatically.

7. Diagnostic tool (5) according to one of the preceding claims,
**characterised in that**
the correlated device status (2) and the correlated plant status (1) can be indicated graphically.

8. Diagnostic tool (5) according to one of the preceding claims,
**characterised in that**
the device status (2) and the plant status (1) at least comprise information relating to the operation and/or downtime.

9. Diagnostic tool (5) according to claim 8,
**characterised in that**
the device status (2) and the plant status (1) comprise further information relating to the operation or downtime.

10. Diagnostic tool (5) according to one of the preceding claims,
**characterised in that**
the diagnostic tool (5) is configured as a software tool.

11. Diagnostic tool (5) according to one of the preceding claims,
**characterised in that**
the recording, the transmission of the device status (2) and also the plant status (1) and the assignment to a time base (6) are carried out with a minimal or even no time offset.

12. Diagnostic tool (5) according to one of the preceding claims,
**characterised in that**
the time base (6) comprises the date and/or the current time.

13. Diagnostic method for determining an interruption of a plant (7) with at least one device,
**characterised by** the steps:
- determining a plant status (1) at a recording time by recording at least one plant status value and transmitting the plant status (1) to the diagnostic tool (5), wherein the plant status indicates the status of the plant as a whole,
- determining a device status (2) at a recording time by recording at least one device status value and transmitting the device status (2) to the diagnostic tool (5),
- wherein, when the device status and the plant status are transmitted at the same time, a shared time base is assigned to the transmitted device status and the transmitted plant status,
- wherein if a time stamp is already available, which was transmitted with the plant status (1) or with the device status (2), said shared time base (6) can overwrite the time stamp or additionally be assigned,
- wherein the diagnostics further contains the following step:
- correlating the transmitted device status (2) and the transmitted plant status (1).

14. Diagnostic method of determination according to claim 13, **characterised in that**
a coordination on a shared time base (6) is effected by integrating the device status (2) and the plant status (1) into the diagnostic tool (5).

15. Diagnostic method of determination according to claim 13 or 14,
**characterised in that**
upon integration of the plant status (1) and the device status, the same time stamp is allocated to the plant status (1) and to the device status (2).

## Revendications

1. Outil (5) de diagnostic pour la détermination d'une défaillance d'une installation (7) comprenant au moins un appareil,
**caractérisé en ce que**
- un état (1) de l'installation à un instant de détection peut être déterminé en détectant au moins une valeur de l'état de l'installation et l'état de l'installation peut être transmis à l'outil (5) de diagnostic, l'état de l'installation montrant l'état de l'installation dans son ensemble,
- un état (2) de l'appareil à l'instant de détection peut être déterminé en détectant au moins une valeur de l'état de l'appareil et l'état (2) de l'appareil peut être transmis à l'outil (5) de diagnostic,
- lors d'une transmission en même temps de l'état de l'appareil et de l'état de l'installation, une base de temps commune est affectée à l'état de l'appareil transmis et à l'état de l'installation transmis, dans lequel dans le cas d'un horodatage déjà présent, qui a été transmis avec l'état (1) de l'installation ou avec l'état (2) de l'appareil, cette base (6) de temps commune peut écraser l'horodatage ou l'associer supplémentairement,
- et l'état (2) de l'appareil transmis et l'état (1) de l'installation transmis peuvent être mis en corrélation.

2. Outil (5) de diagnostic suivant la revendication 1,
**caractérisé en ce que**
une mise sur une base (6) de temps commune peut être obtenue par intégration de l'état (2) de l'appareil et de l'état (1) de l'installation dans l'outil (5) de diagnostic.

3. Outil (5) de diagnostic suivant la revendication 2, **caractérisé en ce que**,
lors de l'intégration de l'état (1) de l'installation et de l'état (2) de l'appareil, l'attribution du même horodatage à l'état (1) de l'installation et à l'état (2) de l'appareil peut être effectuée.

4. Outil (5) de diagnostic suivant l'une des revendications précédentes, **caractérisé en ce qu'**en exploitant l'état (2) de l'appareil corrélé et l'état (1) de l'installation corrélé sur la base (6) de temps commune, on peut obtenir une catégorisation de la défaillance.

5. Outil (5) de diagnostic suivant la revendication 4, **caractérisé en ce que** la défaillance a lieu, au moins en ce qui concerne une défaillance faisant obstacle à la production et une défaillance ne faisant pas obstacle à la production.

6. Outil (5) de diagnostic suivant la revendication 4 ou 5, **caractérisé en ce que**
l'exploitation peut être effectuée manuellement ou automatiquement.

7. Outil (5) de diagnostic suivant l'une des revendications précédentes,
**caractérisé en ce que**
l'état (2) de l'appareil mis en corrélation et l'état (1) de l'installation mis en corrélation peuvent être indiqués graphiquement.

8. Outil (5) de diagnostic suivant l'une des revendications précédentes,
**caractérisé en ce que**
l'état (2) de l'appareil et l'état (1) de l'installation comprennent au moins des informations sur le fonctionnement et/ou l'état d'arrêt.

9. Outil (5) de diagnostic suivant la revendication 8,
**caractérisé en ce que**
l'état (2) de l'appareil et l'état (1) de l'installation comprennent d'autres informations concernant le fonctionnement ou l'état d'arrêt.

10. Outil (5) de diagnostic suivant l'une des revendications précédentes,
**caractérisé en ce que**
l'outil (5) de diagnostic est conformé en outil logiciel.

11. Outil (5) de diagnostic suivant l'une des revendications précédentes,
**caractérisé en ce que**
la détection, la transmission de l'état (2) de l'appareil, ainsi que de l'état (1) de l'installation et l'affectation à une base (6) de temps s'effectuent avec peu ou pas du tout de décalage dans le temps.

12. Outil (5) de diagnostic suivant l'une des revendications précédentes,
**caractérisé en ce que**
la base (6) de temps comprend la date et/ou l'heure exacte instantanée.

13. Procédé de diagnostic pour la détermination d'une défaillance d'une installation (7) comprenant au moins un appareil **caractérisé par** les stades :
- détermination d'un état (1) de l'installation à un instant de détection par détection d'au moins une valeur d'état de l'installation et transmission de l'état (1) de l'installation à l'outil (5) de diagnostic, l'état de l'installation montrant l'état de l'installation dans son ensemble,
- détermination d'un état (2) de l'appareil à l'instant de détection par détection d'au moins une valeur d'état de l'appareil et transmission de l'état (2) de l'appareil à l'outil (5) de diagnostic,
- dans lequel, lors de la détermination en même temps de l'état de l'appareil et de l'état (1) de l'installation, on associe à l'état de l'appareil transmis et à l'état de l'installation transmis une base de temps commune, et
- dans le cas d'un horodatage déjà présent, qui a été transmis avec l'état (1) de l'installation et avec l'état (2) de l'appareil, cette base (6) de temps commune peut écraser l'horodatage ou être associée supplémentairement,
- dans lequel le diagnostic comprend en outre le stade suivant :
- mise en corrélation de l'état (2) de l'appareil transmis et de l'état (1) de l'installation transmis.

14. Procédé de diagnostic pour la détermination suivant la revendication 13,
**caractérisé en ce que**
une mise sur une base (6) de temps commune est obtenue par intégration de l'état (2) de l'appareil et de l'état (1) de l'installation dans l'outil (5) de diagnostic.

15. Procédé de diagnostic pour la détermination suivant la revendication 13 ou 14,
**caractérisé en ce que**,
lors de l'intégration de l'état (1) de l'installation et de l'état de l'appareil, on effectue l'attribution du même horodatage à l'état (1) de l'installation et à l'état (2) de l'appareil.
